Europäisches Patentamt

European Patent Office

Office européen des brevets

(19)

(11) Veröffentlichungsnummer: **0 124 848**
**B1**

(12) # EUROPÄISCHE PATENTSCHRIFT

(45) Veröffentlichungstag der Patentschrift:
02.09.87

(21) Anmeldenummer: **84104856.4**

(22) Anmeldetag: **30.04.84**

(51) Int. Cl.⁴: **H 01 B 1/12, C 08 G 73/06**

(54) Elektrisch leitfähige Formkörper aus der Klasse der Pyrrol-Polymerisate.

(30) Priorität: **04.05.83 DE 3316183**

(43) Veröffentlichungstag der Anmeldung:
**14.11.84 Patentblatt 84/46**

(45) Bekanntmachung des Hinweises auf die Patenterteilung:
**02.09.87 Patentblatt 87/36**

(84) Benannte Vertragsstaaten:
**BE DE FR GB NL**

(56) Entgegenhaltungen:
**EP-A-0 101 894**
**US-A-3 574 072**

**Die Akte enthält technische Angaben, die nach
dem Eingang der Anmeldung eingereicht wurden
und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Münstedt, Helmut, Dr., An dem Altenbach 41, D-6706 Wachenheim (DE)**
Erfinder: **Naarmann, Herbert, Dr., Haardtblick 15, D-6719 Wattenheim (DE)**
Erfinder: **Penzel, Erich, Dr., Carl- Bosch- Strasse 86, D-6700 Ludwigshafen (DE)**
Erfinder: **Schlag, Johannes, Dr., Leuschnerstrasse 36, D-6700 Ludwigshafen (DE)**
Erfinder: **Nägele, Dieter, Dr., Gudastrasse 2, D-6520 Worms 24 (DE)**

EP 0 124 848 B1

## Beschreibung

Die Erfindung betrifft elektrisch leitfähige Formkörper aus der Klasse der Pyrrol-Polymerisate, die mit organischen Kunststoffen beschichtet sind.

Elektrisch leitfähige Pyrrol-Polymerisate sind bekannt. So z. B. aus der US-PS 3,574,072 und den Arbeiten von A.F. Diaz et al., J.C.S.Chem. Comm. 1979, Seite 635 ff, J.C.S.Chem. Comm. 1979, Seite 854 ff. Diese elektrisch leitfähigen Pyrrol-Polymerisate werden durch anodische Polymerisation von Pyrrol in Gegenwart von Leitsalzen gebildet. Die Anionen der Leitsalze wirken als Komplexierungsmittel mit der Eigenschaft, daß das System aus Polypyrrol und Komplexierungsmittel leitfähig ist. Es ist in einer Reihe von älteren Vorschlägen und Veröffentlichungen die Verwendung elektrisch leitfähiger Pyrrol-Polymerisate in der Elektrotechnik z. B. als elektrische Speichersysteme für Batterien, als Schalter oder andere elektrische Bauteile beschrieben.

Es hat sich gezeigt, daß die bislang bekanntgewordenen elektrisch leitfähigen Polymerisate eine gewisse Empfindlichkeit gegenüber der Einwirkung des Sauerstoffs der Luft haben, so daß bei längerer Lagerung an Luft die Leitfähigkeit verringert wird. Dies gilt auch für elektrisch leitfähige Schichten aus Pyrrol-Polymeren, die gemäß EP-A 101 894 zur Herstellung von elektronischen Bauteilen beidseitig mit elektrisch nicht leitenden Polymeren, und zwar mit Polyethylen, -propylen, -styrol, -urethan, -ester oder -amiden verbunden werden. Es ist bereits vorgeschlagen worden, elektrisch leitfähige Acetylen-Polymerisate oberflächlich zu beschichten, und zwar mit Paraffinwachs, Polyethylen oder mit Polyvinylidenchlorid. Es zeigte sich jedoch, daß hinsichtlich der Widerstandsfähigkeit gegenüber der Einwirkung von Luftsauerstoff hierdurch nur eine geringe Verbesserung eintritt und Produkte mit einer technisch interessanten Langzeitstabilität der Leitfähigkeit nicht zu erhalten sind.

Aufgabe der Erfindung ist es daher, Formkörper aus Verbindungen der Klasse der Pyrrol-Polymerisate aufzuzeigen, die gegenüber der Einwirkung von Sauerstoff nicht oder nur in geringem Maße empfindlich sind.

Diese Aufgabe wird erfindungsgemäß gelöst durch Formkörper aus elektrisch leitfähigen Polymerisaten des Pyrrols und/oder substituierter Pyrrole, die mit organischen Kunststoffen überzogen sind, die eine Permeabilität für Sauerstoff von

$$0,1 \text{ bis } 0,5 \ \frac{cm^3 \cdot 100 \, \mu m}{m^2 \cdot d \cdot bar}$$

bei 20°C haben. ("d" = Abkürzung von "day", d.h. "Tag")

Eine bevorzugte Ausführungsform der Erfindung sind Formkörper in Gestalt von Folien, Bahnen, Fäden oder Fasern.

Die erfindungsgemäß zu verwendenden elektrisch leitfähigen Verbindungen aus der Klasse der Pyrrol-Polymerisate zeichnen sich durch eine hohe elektrische Leitfähigkeit aus, die im allgemeinen im Bereich von 1 bis $10^2$ S/cm liegt.

Die Pyrrol-Polymerisate werden durch Polymerisieren von Pyrrol und/oder N-Alkylpyrrol, N-Arylpyrrol, an den C-Atomen monoalkyl- oder dialkylsubstituiertem Pyrrol und an den C-Atomen monohalogen oder dihalogen substituiertem Pyrrol erhalten. Zur Herstellung der erfindungsgemäß zu verwendenden Polymerisate kann Pyrrol allein oder in Mischung mit anderen Verbindungen aus der Klasse der Pyrrole verwendet werden. Vorzugsweise verwendet man Polymerisate des unsubstituierten Pyrrols. Werden Polymerisate substituierter Pyrrole eingesetzt, so sind Polymerisate des 3,4-Dialkylpyrrol, insbesondere mit 1 bis 4 C-Atomen im Alkyl, sowie auch der 3,4-Dihalogen-pyrrole, insbesondere des 3,4-Dichlorpyrrol bevorzugt.

Die Polymerisate können auch gegebenenfalls bestimmte Mengen anderer Verbindungen, die mit Pyrrolen copolymerisieren, einpolymerisiert enthalten. Als Verbindungen, die mit Pyrrolen copolymerisieren, eignen sich z. B. Cyclopentadien-Azulen und dessen Derivaten, wie Benzazulen, Kajaazulen, ferner Fulven, Inden oder auch Quadratsäure. Es kommen auch heterocyclische Verbindungen in Frage, wie Imidazol, Thiazol, Furan oder Thiophen. Auch 2-Bromthiophen, 2,6-Dimethylpyrridin und Pyrazin können verwendet werden. Bezogen auf 10 Teile Pyrrol können die Polymerisate 1 bis 10 Teile der mit Pyrrol copolymerisierenden Verbindungen einpolymerisiert enthalten.

Die Polymerisate werden bevorzugt durch elektrochemische Polymerisation der Pyrrole erhalten, wobei die Polymerisation der Monomeren durch anodische Oxidation erfolgt. Es werden hierzu beispielsweise Stromdichten von 2 bis 20 mA/cm² verwendet. Es werden meistens Spannungen im Bereich von 10 bis 300 Volt angelegt. Die Polymerisation erfolgt zweckmäßig in Gegenwart von Hilfsflüssigkeiten, worin die Pyrrole löslich sind. Es können hierzu polare organische Lösungsmittel verwendet werden. Verwendet man mit Wasser mischbare Lösungsmittel, so können auch geringe Mengen Wasser zugesetzt werden. Bevorzugte Lösungsmittel sind Alkohole, Ether wie Dioxan oder auch Tetrahydrofuran, Aceton oder Acetonitril, Dimethylformamid oder n-Methylpyrrolidon.

Die Polymerisation erfolgt in Gegenwart von Komplexierungsmitteln. Man versteht hierunter Salze, die als Anionen beispielweise Verbindungen der Gruppr $BF_4^-$, $AsF_4^-$, $AsF_6^-$, $SbF_6^-$, $SbCl_6^-$, $PF_6^-$, $ClO_4^-$, $HSO_4^-$, und $SO_4^{2-}$ enthalten.

Diese Salze enthalten als Kationen z.B. Lithium, Natrium oder Kalium. Die Verwendung von Verbindungen dieser Klasse ist bekannt und nicht Gegenstand der Erfindung. Man verwendet im allgemeinen die Verbindung in solcher Menge, daß die Pyrrol-Polymerisate zwischen 10 und 40 Mol-%, bezogen auf 1 Mol Pyrrol der anionischen Komplexierungsmittel enthalten.

Zur Herstellung der Pyrrol-Polymerisate können jedoch auch andere der bekannten Verfahren Verwendung finden. So kann man beispielsweise Pyrrol in wäßriger Lösung mit Hilfe starker Säuren oder mit anorganischen Peroxiverbindungen wie Kaliumpersulfat polymerisieren. Nach dem letztgenannten Verfahren erhält man Pyrrol-Polymerisate in feinpulvriger Form. Auch bei diesen Verfahren sind Salze anwesend, so daß die Pyrrol-Polymerisate mit den entsprechenden Anionen komplexiert sind.

Die Formkörper werden nach verschiedenen Verfahren erhalten. So bildet sich z. B. bei der anodischen Oxidation der Pyrrole ein Polymerisat aus, das mit Anionen komplexiert ist und die Form der verwendeten Anode hat. Ist die Anode flächenförmig, bildet sich eine flächige Schicht des Polymerisates aus. Verwendet man Verfahren zur Herstellung feinpulvriger Pyrrol-Polymerisate, so können diese feinen Pulver nach bekannten Verfahren unter Druck und Hitze zu Formkörpern verpreßt werden. Man wendet meistens Temperaturen zwischen 150 und 300°C und Drücke im Bereich von 50 bis 150 bar an. Nach dieser bekannten Verfahren zur Herstellung der anionisch komplexierten Pyrrol-Polymerisate ist es also möglich, Formkörper beliebiger Formgebung zu erhalten. So können z. B. Folien, Platten oder räumlich geformte Gebilde Verwendung finden.

Die Dimension, die Schichtdicke und die lineare Ausdehnung der Formkörper richten sich nach der angestrebten Verwendung, z. B. als flexible Leiter bahnen, elektrische Widerstände oder elektrische Heizelemente.

Wie bereits erwähnt, sind bevorzugt Formkörper in Gestalt von Folien, Bahnen, Fäden oder Fasern. Von der Erfindung werden jedoch auch andere Formkörper erfaßt, wie beispielsweise Preßlinge aus Polypyrrolpulver mit einer in weiten Grenzen variablen Formgebung.

Die Formkörper werden mit einem organischen Kunststoff überzogen bzw. beschichtet, der eine Permeabilität für Sauerstoff zwischen 0,1 und 0,5

$$\frac{cm^3 \cdot 100\,\mu m}{m^2 \cdot d \cdot bar}$$

bei 20°C hat. Solche geeigneten organischen Kunststoffe sind insbesondere Polymerisate des Vinylidenchlorids, insbesondere Copolymerisate des Vinylidenchlorids mit Acrylsäureestern. Es hat sich als zweckmäßig erwiesen, eine Schichtdicke von größer als 2 μm, insbesondere zwischen 10 bis 150 μm auf die Formkörper aus der Klasse der Pyrrol-Polymerisate aufzutragen. Die Polymerisate können nach bekannten Verfahren der Beschichtung in Form von Dispersionen oder Lösungen auf die Pyrrol-Polymerisate aufgetragen und die Schichten durch Verdampfen des Dispergier- bzw.

Lösungsmittels erhalten werden.

Die erfindungsgemäßen Formkörper werden auf den Anwendungsgebieten verwendet, in denen elektrisch leitfähige Polymerisate Verwendung finden, die der Einwirkung von Sauerstoff ausgesetzt sind. Dies ist z. B. der Fall bei der Verwendung als flexible elektrische Leiterbahnen, als elektrische Widerstandsmaterial oder als elektrische Heizelemente.

### Beispiel 1

Eine unbeschichtete Folie des Polypyrrols wird zusammen mit einer anderen Folie des Polypyrrols, die jedoch in einer Stärke von etwa 100 μm mit einem Polymerisat des Vinylidenchlorids beschichtet ist, bei 80° C in Luftatmosphäre getempert. Nach 26 Tagen Temperdauer beträgt die elektrische Leitfähigkeit der umbeschichteten Folie nur noch 25 %, die der beschichteten Folie jedoch noch 85 % der Anfangswerte der Leitfähigkeit.

Bei Zimmertemperatur laufen die Alterungsvorgänge sehr viel langsamer ab. Extrapolationen aus Untersuchungen bei höheren Temperaturen weisen auf eine Lagerzeit von Jahren für Leitfähigkeitsänderungen der beschichteten Folie in der oben angegebenen Größenordnung hin.

### Beispiel 2

Je eine Folie eines Polypyrrols wird mit einem handelsüblichen Isolierlack auf Basis Nitrozellulose bzw. Polymerisat eines Vinylidenchlorids in einer Stärke von rund 50 μm beschichtet. Nach einer fünftägigen Temperung bei 80°C beträgt die elektrische Leitfähigkeit der unbeschichteten Folie 60 %, die der mit Isolierlack beschichteten 55 % und die der mit dem Vinylidenchloridpolymeren beschichteten 85 % der jeweiligen Ausgangsleitfähigkeiten.

### Vergleichsbeispiel

Ein Polyacetylenfilm wird in einer Stärke von etwa 50 μm mit dem Vinylidenchloridpolymeren der Beispiele 1 und 2 beschichtet. Bei Lagerung an Luft unter Raumtemperatur beträgt die elektrische Leitfähigkeit des unbeschichteten Films nach drei Tagen 22 % des Wertes nach einem Tag, die des beschichteten Films 10 %.

Der stärkere Leitfähigkeitsabfall des beschichteten Films ist auf das bei der Beschichtung eingeschleppte Wasser zurückzuführen.

Die Meßergebnisse der Beispiele demonstrieren den technischen Fortschritt, der bezüglich der Langzeitstabilität der elektrischen Leitfähigkeit mit polyvinylidenchloridbeschichtetem Polypyrrol im Vergleich zu den bekannten beschichteten Polyacetylenfolien erreicht worden ist.

**Patentansprüche**

1. Formkörper aus leitfähigen Polymerisaten von Pyrrol und/oder N-alkyl oder -aryl oder C-mono- oder -di-alkyl oder -halogen substituiertem Pyrrol, die mit organischen Kunststoffen überzogen sind, die eine Permeabilität für Sauerstoff von

$$0,1 \text{ bis } 0,5 \frac{cm^3 \cdot 100 \mu m}{m^2 \cdot Tag \cdot bar}$$

bei 20°C haben.

2. Formkörper nach Anspruch 1 in Gestalt von Folien, Bahnen, Fäden oder Fasern.

3. Formkörper nach den Ansprüchen 1 und 2, bei denen die Schichtdicke des Überzuges im Bereich zwischen 10 und 150 μm liegt.

4. Formkörper nach den Ansprüchen 1, 2 und 3, bei denen der Überzug aus Polymerisaten des Vinylidenchlorides besteht.

**Claims**

1. Mouldings, prepared from conductive polymers of pyrrole and/or N-alkyl- or N-aryl-substituted or C-monoalkyl- or C-dialkyl-substituted or C-monohalogen- or C-dihalogen-substituted pyrrole and coated with an organic plastic, which have a permeability to oxygen of

$$0.1 \text{ to } 0.5 \frac{cm^3 \times 100 \mu m}{m^3 \times day \times bar}$$

at 20°C.

2. Mouldings as claimed in claim 1 in the form of sheets, webs, filaments or fibres.

3. Mouldings as claimed in claims 1 and 2, wherein the thickness of the coating is from 10 to 150 μm.

4. Mouldings as claimed in claims 1, 2 and 3, wherein the coating consists of polyvinylidene chloride.

**Revendications**

1. Articles façonnés en polymères du pyrrole et(ou) de pyrrole N-alkyl- ou N-aryl-substitué ou C-mono- ou C-di-alkyl-substitué ou C-mono- ou C-di-halo-substitué, conducteurs de l'électricité, revêtus de matières plastiques organiques, possédant à 20°C une perméabilité pour l'oxygène comprise

$$\text{entre } 0,1 \text{ et } 0,5 \frac{cm^3 \times 100 \mu m}{m^3 \times jour \times bar}$$

2. Articles façonnés suivant la revendication 1 sous forme de feuilles, de bandes, de fils ou de fibres.

3. Articles façonnés suivant les revendications 1 et 2 dont le revêtement possède une épaisseur comprise entre 10 et 150 μm.

4. Articles façonnés suivant les revendications 1, 2 et 3 dont le revêtement est constitué de polymères du chlorure de vinylidène.